# NEUE EUROPÄISCHE PATENTSCHRIFT

(11) **EP 0 287 711 B2**
(45) Veröffentlichungstag und Bekanntmachung des Hinweises auf die Entscheidung über den Einspruch: **11.06.1997**
(45) Hinweis auf die Patenterteilung: 15.04.1992
(21) Anmeldenummer: 87118286.1
(22) Anmeldetag: 10.12.1987
(51) Int. Cl.: B23B 51/04, B23C 5/10

(54) **Bohrnutenfräser**
Drilling and milling tool
Outil de fraisage et de perçage

(30) Priorität: 17.04.1987 DE 3713161
(43) Veröffentlichungstag der Anmeldung: 26.10.1988
(73) Patentinhaber: WALTER Aktiengesellschaft, D-72010 Tübingen (DE)
(72) Erfinder: Icks, Gerd Dr.-Ing., D-7406 Mössingen 3 (DE)
(74) Vertreter: Rüger, Rudolf, Dr.-Ing.

(56) Entgegenhaltungen:
- EP-A- 88 505
- EP-A- 0 088 505
- DE-A- 3 209 821
- FR-A- 2 311 623
- FR-A- 2 334 456
- FR-A- 2 387 723
- GB-A- 2 010 707
- GB-A- 2 164 283
- US-A- 4 140 431
- Prospekt der Firma Schneider "Puntefrese universali"
- "Werkzeug-Programm," Ausgabe 1986 der Firma SECO

## Beschreibung

Die Erfindung geht aus von einer Wendeschneidplatte für Bohrnutenfräser.

Eine gattungsgemäße Wendeschneidplatte ist unter der Typenbezeichnung CCMX in dem Katalog der Firma Seco, Ausgabe 1, 1986, gezeigt. Diese Wendeschneidplatte hat in der Draufsicht eine etwa rautenförmige Gestalt mit insgesamt vier Hauptschneiden. An jede der vier Hauptschneiden schließt sich nach innen zu jeweils eine Spanfläche an, die in unmittelbarer Nachbarschaft der Schneidkante eben ist und unter einem Spanwinkel von 0_{°} verläuft. Die Tiefe von jeweils zwei zueinander parallel verlaufenden Spanflächen, gemessen senkrecht zu der Schneidkante, ist gleich, während die Tiefe an zwei unmittelbar benachbarten Schneidkanten unterschiedlich ist.

Sämtliche Spanflächen schließen eine innenliegende Plateaufläche ein, die sich über die von den Schneidkanten definierte Ebene, die parallel zu der Rückseite der Wendeschneidplatte ist, erhebt.

Der Katalog enthält keine Angaben darüber, ob diese Wendeschneidplatte lediglich an den Bohrerschneiden eine spanbrechende Wirkung aufweist.

Aus der DE-A-32 09 821 ist ein Bohrnutenfräser bekannt. Dieser enthält in den etwa spiralig längs des Umfangs sich erstreckenden Spannuten mehrere Taschen, in denen viereckige Wendeschneidplatten gehaltert sind. Eine von diesen Wendeschneidplatten liegt an der Fräserspitze radial außen, so daß von dieser Wendeschneidplatte während des Bohrens die in Achsrichtung vordere Schneide und während des Fräsens die am Umfang angeordnete Schneide arbeitet.

Da bei dem bekannten Bohrnutenfräser sämtliche Schneiden einer Wendeschneidplatte dieselbe Geometrie aufweisen, entsteht ein endloser nicht brechender Span an der die Bohrarbeit leistenden Schneide. Solche endlosen Späne können entweder in Gestalt eines Wendelspans oder in Gestalt eines Bandspans anfallen, je nachdem, welches Material bearbeitet wird. Beide Arten von Spänen sind außerordentlich unangenehm und neigen dazu, das Werkzeug und/oder das Werkstück zu beschädigen.

Bei dem Bandspan kommt noch hinzu, daß er mit sehr hoher Geschwindigkeit aus dem Bohrloch herausschießt.

Beim Fräsen dagegen können keine endlosen Späne auftreten. Ihre Länge ist von Natur aus auf den halben Fräserumfang beschränkt. Außerdem weisen sie im Querschnitt eine etwa sichelförmige Gestalt auf und lassen sich deswegen auch leicht stauchen.

Die GB-A-2 010 707 zeigt einen wendeplattenbestückten einschneidigen Bohrer mit einem im wesentlichen zylindrischen Grundkörper, der an seinem vorderen, verjüngten Ende eine Tasche für eine neutral gebettete Wendeschneidplatte enthält. Die Wendeschneidplatte ist parallelogrammförmig und enthält eine im wesentlichen plane Vorderseite sowie eine dazu im wesentlichen parallele, ebenfalls plane Rück- oder Auflagefläche, mit der sie in der Aufnahmetasche aufliegt. Infolge der Bettung der Wendeschneidplatte liegt die zu der Bohrerachse parallele Vorderseite vor der Drehachse, so daß bei einer neutralen Platte die Drehachse hinter der Schneide verlaufen würde. Der dabei entstehende Materialkegel würde auf die Freifläche stoßen und ein weiteres Eindringen des Bohrers verhindern. Um dies zu vermeiden, ist die Wendeschneidplatte an zwei zueinander parallelen Schneidkanten mit keilförmigen Vertiefungen versehen. Bei eingesetzter Wendeschneidplatte wird auf diese Weise eine Schneidkante erhalten, die von der äußeren Schneidecke, an der sie auf der Vorderseite der Wendeschneidplatte liegt, gegenüber dieser Vorderseite zunehmend tiefer verläuft, damit sie hinter der Bohrerachse an dieser vorbeiläuft. Der beim Bohren entstehende Materialzapfen liegt dadurch vor der Spanfläche und kann während des Bohrvorgangs immer wieder abgebrochen werden. Die Spanfläche ist eben und verläuft unter einem Spanwinkel von 0_{°}.

Infolge der gegenüber der Vorderseite der Wendeschneidplatte schräg verlaufenden Schneidkante bzw. schräg verlaufenden Spanfläche entsteht hinter dieser eine Rampe, die an der äußeren Schneidecke, also gerade dort, wo der größte Materialabtrag entsteht, die Höhe null hat, während sie in Richtung auf die Bohrerachse zunehmend höher wird.

Aus einem Katalog der Firma "Utensileria Schneider" , der die Bezeichnung "Puntefrese Universali" trägt, ist ein Bohrnutenfräser bekannt, der mit Wendeschneidplatten bestückt ist. Eine dieser Wendeschneidplatten ist so angeordnet, daß sie sowohl die Bohrschneide als auch die Frässchneide des Werkzeugs bildet. Diese Wendeschneidplatte ist eine rechteckige Lochplatte mit einer planen Rückseite und einer planen Vorderseite, so daß sich im Bereich der Frässchneiden ein auf die Wendeschneidplatte bezogener Spanwinkel von 0° ergibt. Um im Bereich der Bohrschneiden einen größeren Winkel zu erzeugen, ist in die Vorderfläche eine Mulde eingeschliffen, die in Richtung auf diejenige Ecke, an der die Bohrschneide und die Frässchneide ineinander übergehen, spitz ausläuft. Am gegenüberliegenden Ende ist dagegen die Mulde relativ sehr breit. Beim Einschleifen der Mulde wurde darauf geachtet, daß die Bohrschneide sich in derselben Ebene wie die Frässchneide befindet.

Aufgrund dieser Anordnung ist die als Frässchneide wirkende Schneide frei von jeglichen Einrichtungen, die spanbrechend wirken könnten. Die sich an die Bohrschneide anschließende Mulde wirkt ebenfalls nicht im spanbrechenden Sinne, weil die von der Bohrschneide abliegende Rückflanke der Mulde über wenigstens 80% der Länge der Bohrschneide einen solchen Abstand von dieser hat, daß der Span nicht an der Rückflanke anläuft. In einem die Schneidecke angrenzenden Bereich ist die Breite der Mulde zu klein, als daß eine spanbrechende Wirkung erzielt werden kann, so daß lediglich in einem Bereich von höchstens 10% der Länge der Bohrschneide der Abstand zwischen Schneidkante und der Rückflanke der Mulde in dem Bereich liegt, in dem üblicherweise Spanbrechereinrichtungen von Schneidkanten beabstandet sind. Da dieser Bereich im inneren Bereich des entstehenden Spans liegt, fehlt bei der bekannten Wendeschneidplatte die Spanbrecherwirkung, denn der Span wird beidseits dieses Bereiche, wo eine Spanbrecherwirkung, wenn überhaupt, auftreten könnte, stabilisiert. Somit ist die bekannte Wendeschneidplatte auch im Bereich der Bohrschneiden frei von Spanbrechereinrichtungen.

Ausgehend hiervon ist es Aufgabe der Erfindung, eine Wendeschneidplatte zu schaffen, die zum Bohren und Fräsen gleich gut geeignet ist.

Diese Aufgabe wird erfindungsgemäß durch eine Wendeschneidplatte mit den Merkmalen des Anspruches 1 bzw. des Anspruches 2 gelöst

Die Anpassung der Wendeschneidplatte an die unterschiedlichen Funktionen geschieht dadurch, daß an den beiden aneinander angrenzenden Schneiden unterschiedliche Schneidengeometrien vorliegen, die hinsichtlich des jeweiligen Verwendungszweckes optimiert sind. Es haben auf diese Weise die beiden zueinander parallelen Schneiden der viereckigen Wendeschneidplatte die gleiche Schneidengeometrie. Wenn eine solche Wendeschneidplatte in die an der Fräserspitze radial außen liegende Tasche eingesetzt wird, kann mit dem so erhaltenen Bohrnutenfräser mit der gleichen Qualität gebohrt werden wie es sonst bei reinen Bohrern der Fall ist. Andererseits unterliegt das Fräsen mit einem solchen Bohrnutenfräser keinen Beschränkungen und erfolgt mit der gleichen Qualität wie es von umfangsschneidenden Schaftfräsern her bekannt ist.

Um zu verhindern, daß beim Bohren mit dem neuen Bohrnutenfräser endlose Späne auftreten, kann an zwei zueinander parallelen Schneidkanten je eine zugehörige Spanbrechereinrichtung vorgesehen sein, während die anderen beiden zueinander parallelen Schneidkanten von solchen Spanbrechereinrichtungen frei sein. Der Ablauf der beim Fräsen entstehenden Späne, die nicht gebrochen werden müssen, wird auf diese Weise nicht behindert. Dies kommt der Antriebsleistung der mit einem solchen Fräser bestückten Werkzeugmaschine zugute, da beim Fräsen keine zusätzliche Verformungsarbeit bei den abgetrennten Spänen aufgebracht werden muß. Die Bohrschneide ist ohnehin nach dem Beenden des Bohrvorganges wirkungslos, sobald nach dem Fräsen der gegebenenfalls am Bohrgrund bestehende konvexe Kegel von der Bohrschneide abgetragen ist. Während des Abtragens dieses Kegels muß die Antriebsmaschine zwar eine zusätzliche Arbeit beim Verformen der nunmehr durch Fräsen anfallenden Späne, die von dem Bohrschneider erzeugt werden, aufbringen, doch beschränkt sich dies auf eine Strecke in Fräsrichtung, die dem Fräserdurchmesser entspricht. Dafür entstehen während des Bohrens nur kurze ungefährliche Späne.

Diese Spanbrechereinrichtungen können entweder dadurch erzeugt werden, daß die Plateaufläche,die von den Spanflächen eingerahmt ist, höher liegt als die beiden parallel zueinander verlaufenden Bohrschneiden, andererseits aber nicht die Höhe der beiden Frässchneiden übersteigt. Die andere Möglichkeit besteht darin, auf der Plateaufläche zwei Leisten auszubilden, die parallel zu den zugehörigen Bohrschneiden verlaufen, während die Plateaufläche tiefer liegt als die auf dem niedrigsten Niveau befindlichen Schneidkanten.

Das Brechen des Spanes wird dabei verbessert, wenn die muldenförmige Spanfläche am Fuß der Spanbrechereinrichtung eine weitere muldenförmige Vertiefung enthält, die sich parallel im Abstand von der Schneidkante erstreckt.

Eine weitere Verbesserung bei der Spanerzeugung und beim Brechen der Späne während des Bohrvorganges kann erreicht werden, wenn die Spanflächen, die sich an die Schneidkanten anschließen, denen Spanbrechereinrichtungen zugeordnet sind, ein oder mehrere in Schneidenrichtung verteilte Vertiefungen aufweisen, die entweder vor der Schneidkante enden oder diese durchsetzen, so daß sich ein wellenförmiger Schneidenverlauf ergibt.

In der Zeichnung ist ein Ausführungsbeispiel des Gegenstandes der Erfindung dargestellt. Es zeigen:
- Fig. 1: einen Bohrnutenfräser gemäß der Erfindung in einer Seitenansicht,
- Fig. 2: die an der Stirnseite radial außen sitzende Wendeschneidplatte gemäß der Erfindung in einer Draufsicht,
- Fig. 3: einen Teil eines Schnittes der Wendeschneidplatte nach Fig. 2 entlang der Linie III-III nach Fig. 2,
- Fig. 4: die Wendeschneidplatte nach Fig. 2, geschnitten entlang der Linie IV-IV in einer Seitenansicht,
- Fig. 5: ein anderes Ausführungsbeispiel der erfindungsgemäßen Wendeschneidplatte mit gegenüber den die Bohrarbeit leistenden Schneidkanten erhöhter Plateaufläche, in einer Draufsicht,
- Fig. 6: die Wendeschneidplatte nach Fig. 5, geschnitten entlang der Linie VI-VI in einer vergrößerten und verkürzt veranschaulichten Seitenansicht und
- Fig. 7: die Wendeschneidplatte nach Fig. 5, geschnitten entlang der Linie VII-VII in einer vergrößerten und verkürzt dargestellten Seitenansicht.

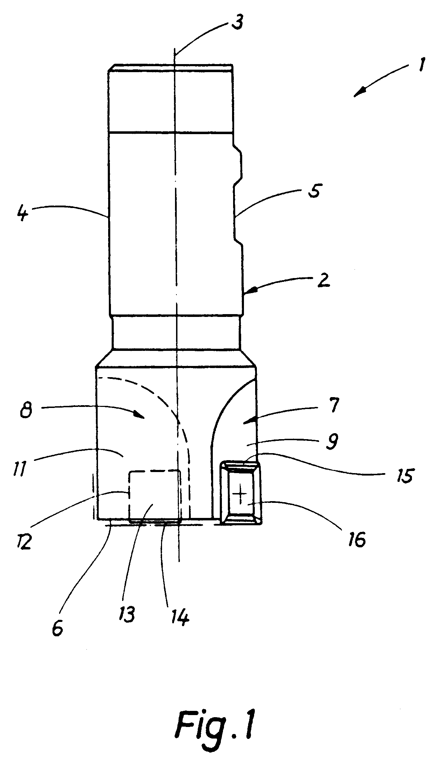

In Fig. 1 ist ein Bohrnutenfräser 1 veranschaulicht, der einen länglichen, etwa zylindrischen Fräsergrundkörper 2 mit einer Längsachse 3 aufweist. Der obere Abschnitt des Fräsergrundkörpers 2 bildet einen Einspannschaft 4, der an seinem Umfang in bekannter Weise als Drehsicherung dienende Abflachungen 5 enthält. Der untere Abschnitt des Fräsergrundkörpers 2, der an einer unteren Stirnseite 6 endet und sich an den Einspannschaft 4 anschließt, enthält in seinem Umfang zwei sowohl in radialer Richtung als auch in Richtung auf die Stirnseite 6 offene Spannuten 7 und 8. Die Spannuten 7 und 8, die einen V-förmig rechtwinkligen Querschnitt aufweisen, erstrecken sich parallel zu der Längsachse 3. Ihre ebenen, etwa radial verlaufenden Rückflächen 9 bzw. 11 erstrecken sich in entgegengesetzte Richtungen, bezogen auf die Längsachse 3, so daß jede Rückenfläche 9 und 11 in Drehrichtung des Bohrnutenfräsers 1 zeigt.

Die Spannut 8 besitzt eine größere radiale Tiefe als die Spannut 7, so daß sie sich über die Längsachse 3, die die Drehachse des Bohrnutenfräsers 1 ist, hinaus erstreckt. Die Spannut 7 dagegen endet in einem erheblichen radialen Abstand von der Längsachse 3.

In die Rückenfäche 11 ist eine Tasche 12 zur Aufnahme einer viereckigen Wendeschneidplatte 13 eingearbeitet, die so angeordnet und gestaltet ist, daß eine Schneidkante 14 der Wendeschneidplatte 13 auf einem Radius der Längsachse 3 verläuft und die Längsachse 3 schneidet, so daß sich die Schneidkante 14, die über die Stirnseite 6 hinaussteht, ein kurzes Stück über die Längsachse 3 hinaus erstreckt. Die Schneidkante 14 endet im übrigen radial innerhalb des Fräsdurchmessers des Bohrnutenfräsers 1.

Auch in die Spannut 7 ist in der Rückfläche 9 eine Tasche 15 für eine zweite Wendeschneidplatte 16 eingearbeitet.

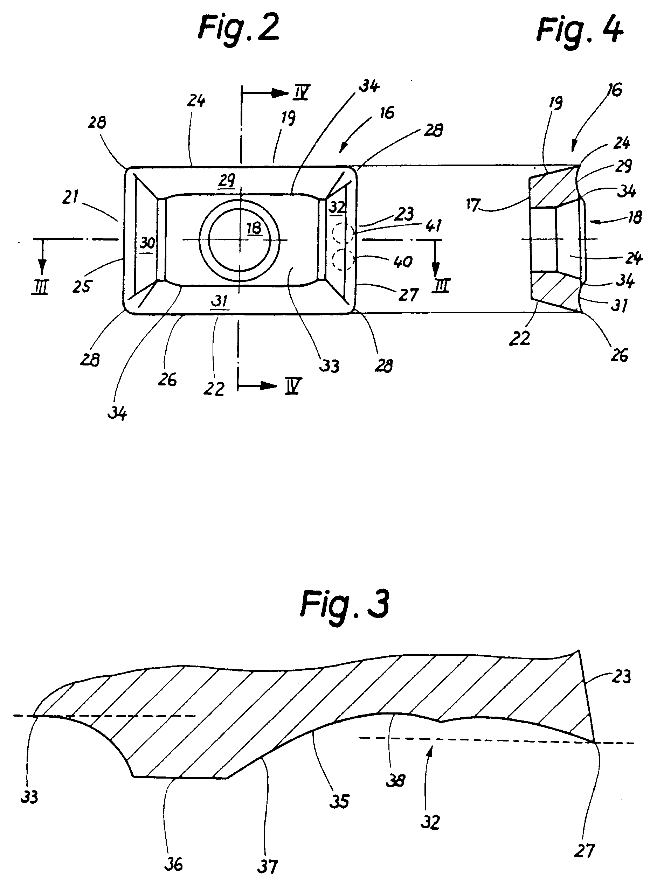

Während die Wendeschneidplatte 14, die nicht bis an den Umfang des Bohrnutenfräsers 1 heranreicht, nur beim Bohren aktiv ist, arbeitet die Wendeschneidplatte 16 sowohl beim Bohren als auch beim Fräsen, da eine ihrer Schneiden am Umfang des Bohrnutenfräsers 1 und die andere Schneide über die Stirnseite 6 hinaussteht. Die Wendeschneidplatte 16 hat die in den Fig. 2 bis 4 gezeigte Gestalt.

Die Wendeschneidplatte 16 ist eine viereckige, parallelogrammförmige Lochplatte mit einer planen Unterseite 17, einer parallel dazu im Abstand verlaufenden strukturierten Oberseite 18 sowie vier den Außenumfang der Wendeschneidplatte 16 bildenden Seiten- oder Freiflächen 19, 21, 22 und 23, die sich zwischen der Unterseite 17 und der Oberseite 18 erstrecken. Die Freiflächen 19, 21, 22 und 23 sind ebene Flächen, die gegenüber der Rückseite 17 um einen dem gewünschten Freiwinkel entsprechenden Winkel geneigt sind. Mittig in der Wendeschneidplatte 16 befindet-sich eine Durchgangsbohrung 24, die der Aufnahme einer Befestigungsschraube zum Haltern der Wendeschneidplatte 16 in dem Bohrnutenfräser 1 dient.

Der Übergang von der jeweiligen Freifläche 19, 21, 22 bzw. 23 in die Oberseite 18 läßt die Schneidkanten entstehen. Die Wendeschneidplatte 16 hat deswegen insgesamt vier gerade verlaufende Schneidkanten 24, 25, 26 und 27, die jeweils paarweise zueinander parallel verlaufen und sich, bezogen auf die Rückseite 17, alle auf derselben Höhe befinden. Dort, wo benachbarte Schneidkanten 24 bis 27 aneinander angrenzen, ist die Wendeschneidplatte 16 unter Ausbildung einer Nebenschneide 28 verrundet. Der Winkel zwischen den Schneidkanten 25 und 26 sowie 24 und 27 beträgt 88°.

In Richtung auf die Mitte der Wendeschneidplatte 16 schließt sich an jede der Schneidkanten 24 bis 27 eine muldenförmige Spanfläche an, die im Anschluß an die jeweilige Schneidkante 24 bis 27 so gestaltet ist, daß sich bei neutraler Bettung der Wendeschneidplatte 16 jeweils ein positiver Spanwinkel ergibt. Dabei sind die zueinander parallelen Spanflächen 29 und 31 untereinander gleich und auch die Spanflächen 30 und 32 sind untereinander gleich, jedoch sind die Spanflächen 30 und 29 bzw. 30 und 31 Voneinander verschieden, in dem Sinne, daß die beiden Spanflächen 29 und 31 im Sinne eines günstigen Schneidens beim Fräsen und die Spanflächen 30 und 32 im Sinne einer guten Spanerzeugung beim Bohren optimiert sind.

Die in der Oberseite 18 ausgebildeten Spanflächen 29 bis 32, die in Richtung auf die Mitte der Wendeschneidplatte gemessen etwa dieselbe Breite aufweisen, rahmen gemeinsam eine ebene und zu der Rückseite 17 parallele Plateaufläche 33 ein, die, bezogen auf die Rückseite 17 nicht höher, vorzugsweise sogar tiefer liegt als eine Ebene, die die vier Schneidkanten 24 bis 27 enthält. Die Plateaufläche 33 reicht mit anderen Worten bis an das dem Platteninneren zugekehrte Ende der jeweiligen Spanfläche 29 bis 32 heran.

Die Spanflächen 29 und 31 gehen mit einer einfachen geradlinigen Kante 34, die gegenüber der zugehörigen Schneidkante 24, 26 liegt, in die Plateaufläche 34 über, wobei die Kante 34 zu der jeweiligen Schneidkante 24 und 26 parallel verläuft. Bei den beim Bohren wirksamen Schneidkanten 25 und 27 ist dagegen am zum Platteninneren hin liegenden Ende der Spanfläche 30 bzw. 32 jeweils eine Spanbrechereinrichtung 35 am Übergang zu der Plateaufläche 33 ausgebildet. Diese Spanbrechereinrichtung 35 enthält, wie die Fig. 3 zeigt, die einen Querschnitt durch die Spanfläche 32 veranschaulicht, eine aus der Plateaufläche 33 aufragenden Leiste 36, die parallel im Abstand von der zugehörigen Schneidkante 27 bzw. 35 verläuft und sich über die von den Schneidkanten 24 bis 27 definierte Ebene hinaus erhebt. Auf ihrer der zugehörigen Schneidkante 25 bzw. 27 zugekehrten Seite bildet die Leiste 36 eine schräge Rampe 37, die etwa unter einem Winkel von 30° gegen die von den Schneidkanten 24 bis 27 definierte Ebene abfällt. Dort, wo die Rampe 37 die erwähnte Ebene durchstößt, geht sie in eine Mulde 38 über, die in der Spanfläche 32 ausgebildet ist und tiefer als diese liegt. Eine solche Schneidengeometrie, wie sie im Bereich zwischen der Leiste 36 und der zugehörigen Schneidkante 27 vorliegt, ist auch unter dem Begriff Doppelspanleitstufe bekannt.

Hierdurch wird erreicht, daß ein von der Schneidkante 27 beim Bohren abgetrennter Span zunächst über die Spanfläche 32 gleitet, bis er in den Bereich der Mulde 38 gelangt, wo die Rückseite des Bohrspanes den Kontakt mit der Wendeschneidplatte 16 verliert. Der Kontakt zwischen der Rückseite des fließenden Spanes und der Wendeschneidplatte 16 entsteht erst wieder im Bereich der schrägen Rampe 37, an der der vorbeifließende Span quer zur Fließrichtung gestaucht bzw. geknickt wird, so daß er hierdurch gebrochen wird.

Während also der Span, der von der Schneidkante 24 bzw. 26 aus dem Werkstück abgetrennt wird, ungehindert abfließen kann, trifft der von der Schneidkante 27 bzw. 25 abgeschnittene Span auf die leistenförmige Erhöhung 36 und wird dort gebrochen.

Bei der Wendeschneidplatte 16 liegen also an zwei aneinander angrenzenden Schneidkanten 24 bis 27 unterschiedliche Schneidengeometrien vor, während zueinander parallele Schneidkanten 24, 26 bzw. 25, 27 jeweils mit derselben Schneidengeometrie versehen sind. Hierdurch wird die Anpassung an den jeweiligen Arbeitszweck erreicht, insofern, als die Schneiden 25 bzw. 27 bei in dem Bohrnutenfräser 1 eingesetzter Wendeschneidplatte 16 die stirnseitige und beim Bohren aktive Schneidkante bilden, während die Schneidkanten 24 oder 26 radial außen am Umfang liegen, um während des Fräsvorganges zu schneiden, bei dem der Span ohnehin auf natürliche Weise nach einer halben Fräserumdrehung endet.

Bei Verwendung der in den Fig. 2 bis 4 dargestellten Wendeschneidplatte 16 treten deswegen sowohl beim Bohren als auch beim Fräsen jeweils verhältnismäßig kurze Späne auf; jedenfalls sind auch beim Bohren endlose Wendel- oder Bandspäne vermieden.

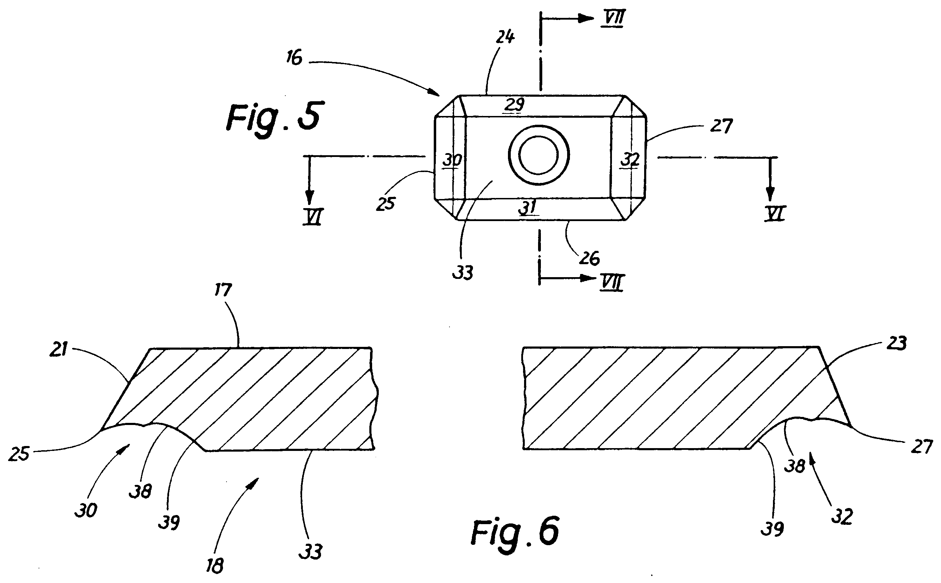

Eine andere Geometrie der Wendeschneidplatte 16, mit der dasselbe Ziel erreicht werden kann, ist in den Fig. 5 bis 7 gezeigt. In diesen Figuren werden, soweit es sich um bereits beschriebene Bauteile handelt, die gleichen Bezugszeichen verwendet.

Die Wendeschneidplatte 16 nach den Fig. 5 bis 7 verwendet anstelle der leistenförmigen Erhöhungen 36 eine erhöhte Plateaufläche 33 und Schneidkanten 24 bis 27, die auf unterschiedlichen Höhen gegenüber der Rückseite 17 angeordnet sind.

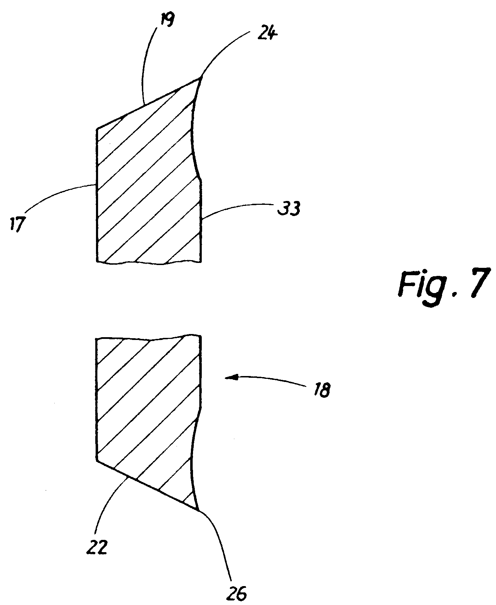

Wie Fig. 7 erkennen läßt, befindet sich die Plateaufläche 33, die wiederum allseitig von den Spanflächen 29 bis 32 eingerahmt ist, auf derselben Höhe oder etwas tiefer als die beiden Schneidkanten 24 und 26. Die beiden zum Bohren dienenden Schneidkanten 25 und 27 liegen dagegen deutlich tiefer als die Plateaufläche 33, wie dies Fig. 6 erkennen läßt. Auf diese Weise entsteht am Übergang zwischen der Plateaufläche 33 zu der Spanfläche 32 bzw. 30 eine in Richtung auf die zugehörige Schneidkante 25 bzw. 27 schräg geneigte Flanke 39, die in der gleichen Weise verläuft wie die Flanke 37 bei dem Ausführungsbeispiel nach den Fig. 2 bis 4. Am Fuß der Flanke 39 ist wiederum die bereits beschriebene muldenförmige Vertiefung 38 in der Spanfläche 30 bzw. 32 ausgebildet. Durch die Erhöhung der Plateaufläche 33 gegenüber den Schneidkanten 25 und 27 entsteht wiederum die auch unter der Bezeichnung Doppelspanleitstufe bekannte Schneidengeometrie.

Bei der Ausführungsform der Wendeschneidplatte nach den Fig. 5 bis 7 befinden sich die beiden zum Fräsen vorgesehenen Schneidkanten 24 und 26 gegenüber der, Rückseite 17 auf einer ersten Höhe, die über der Plateaufläche 33 liegt, während die dem Bohren dienenden Schneidkanten 25 und 27 in einer Ebene liegen, die sich näher an der Rückseite 17 befindet als die Plateaufläche 33. Der von den Schneidkanten 24 und 26 abgeschnittene metallische Span kann deswegen von der Plateaufläche 33 ungehindert leicht abfließen, während der von den Schneidkanten 25 und 27 abgetrennte Span auf die Rampe 39 trifft und dabei einen Schlag erteilt bekommt, der ihn abbrechen läßt.

Weitere Maßnahmen, um den Span beim Bohren leichter brechen zu können, können darin bestehen, in der Spanfläche 30 bzw. 32 Vertiefungen 40 oder 41 auszubilden, die in Fig. 2 gestrichelt angedeutet sind. Mehrere dieser Vertiefungen 40 oder 41 sind längs der entsprechenden Schneidkante 25, 27 nebeneinander angeordnet und durchsetzen entweder, wie die Vertiefung 40 die zugehörige Schneidkante 25 oder 27 oder sie enden vor der Schneidkante 25, 27. Im einen Falle ergibt sich ein etwa wellenförmiger Schneidkantenverlauf, während im anderen Falle der gerade Schneidkantenverlauf erhalten bleibt. Durch die Vertiefungen 40 oder 41 erhält der abgeschnittene Span eine wellenförmige Rückseite, die auch unter ungünstigen Umständen schneller zum Abbrechen mit Hilfe der Flanke 37 bzw. 39 neigt als eine glatte Rückseite, wenn das Werkstück aus einem gut formbaren Metall besteht.

## Patentansprüche

1. Wendeschneidplatte (16) für einen Bohrnutenfräser (1), mit vier jeweils paarweise zueinander parallel verlaufenden Schneidkanten (24...27), die ein Viereck begrenzen, wobei zwischen einander benachbarten Schneidkanten (24...27) gegebenenfalls eine Nebenschneide ausgebildet ist und zwei zueinander parallele Schneidkanten (24, 26) Frässchneiden und die anderen zueinander parallelen Schneidkanten (25, 27) Bohrschneiden bilden, dadurch gekennzeichnet, daß zwei zueinander parallele Schneidkanten (25, 27) mit je einer zugehörigen Spanbrechereinrichtung (33, 39) versehen sind, daß die beiden anderen zueinander parallelen Schneidkanten (24, 26) im wesentlichen frei von Spanbrechereinrichtungen sind, daß die Wendeschneidplatte (16) auf ihrer Oberseite (18) an die Schneidkanten (24, 25, 26, 27) nach innen zu anschließende und muldenförmige Spanflächen (29, 30, 31, 32) aufweist, die eine innenliegende Plateaufläche (33) einrahmen, die nicht höher liegt als die höchste, von zwei zueinander parallelen Schneidkanten (24, 26) definierte Ebene parallel zu der Rückseite (17) der Wendeschneidplatte (16), und daß die anderen beiden zueinander parallelen Schneidkanten (25, 27), bezogen auf die Rückseite (17), tiefer liegen als die Plateaufläche (33).

2. Wendeschneidplatte (16) für einen Bohrnutenfräser (1), mit vier jeweils paarweise zueinander parallel verlaufenden Schneidkanten (24...27), die ein Viereck begrenzen, wobei zwischen einander benachbarten Schneidkanten (24...27) gegebenenfalls eine Nebenschneide ausgebildet ist und zwei zueinander parallele Schneidkanten (24, 26) Frässchneiden und die anderen zueinander parallelen Schneidkanten (25, 27) Bohrschneiden bilden, dadurch gekennzeichnet, daß zwei zueinander parallele Schneidkanten (25, 27) mit je einer zugehörigen Spanbrechereinrichtung (36, 37) versehen sind, daß die beiden anderen zueinander parallelen Schneidkanten (24, 26) im wesentlichen frei von Spanbrechereinrichtungen sind, daß die Wendeschneidplatte (16) auf ihrer Oberseite (18) an die Schneidkanten (24, 25, 26, 27) nach innen zu anschließende und gegebenenfalls muldenförmige Spanflächen (29, 30, 31, 32) aufweist, die eine innenliegende Plateaufläche (33) einrahmen, die nicht höher liegt gegenüber der Rückseite (17) der Wendeschneidplatte (16) als die tiefste von den Schneidkanten (24, 25, 26, 27) definierte Ebene und daß sich aus der Plateaufläche (33) zwei als Spanbrecher dienende Leisten (36) über die durch die Schneidkanten (24, 25, 26, 27) definierte Ebene erheben, die parallel zueinander und parallel zu zwei zugehörigen Schneidkanten (25, 27) verlaufen, und die die Spanflächen (30, 32) an dem an der Schneidkante (25, 27) abliegende Ende begrenzen.

3. Wendeschneidplatte nach Anspruch 1 oder 2, dadurch gekennzeichnet, daß die mit der Spanbrechereinrichtung (36, 37; 33, 39) versehene Spanfläche (30, 32) eine im Abstand von der Schneidkante (25, 27) befindliche und zu dieser parallel verlaufende muldenförmige Vertiefung (38) enthält, die sich am Fuß der Spanbrechereinrichtung (36, 37; 33, 39) befindet.

4. Wendeschneidplatte nach Anspruch 1 oder 2, dadurch gekennzeichnet, daß die Schneidkanten (25, 27), denen Spanbrechereinrichtungen (36, 37, 38; 33, 39, 38) zugeordnet sind, wellenförmig verlaufen.

5. Wendeschneidplatte nach Anspruch 1 oder 2, dadurch gekennzeichnet, daß die Spanflächen (30, 32), denen Spanbrechereinrichtungen (36, 37, 38; 33, 39, 38) zugeordnet sind, eine oder mehrere in Schneidenrichtung verteilte Vertiefungen (40, 41) aufweisen.

6. Wendeschneidplatte nach Anspruch 5,
dadurch gekennzeichnet, daß die Vertiefungen (41) vor den Schneidkanten (25, 27) enden, ohne diese zu durchsetzen.

7. Wendeschneidplatte nach Anspruch 1 oder 2, dadurch gekennzeichnet, daß die Vertiefungen (40) die Schneidkanten (25, 27) durchsetzen.

8. Wendeschneidplatte nach Anspruch 2 oder 3, dadurch gekennzeichnet, daß die Wendeschneidplatte (16) parallelogrammförmig bzw. rautenförmig ist, wobei der kleinere Winkel, den zwei benachbarte Schneidkanten (24...27) miteinander einschließen, zwischen 75° und 90°, vorzugsweise bei 88° liegt.

9. Wendeschneidplatte nach Anspruch 2, dadurch gekennzeichnet, daß alle vier Schneidkanten (24, 25, 26, 27) in einer gemeinsamen Ebene liegen.

10. Bohrnutenfräser zur spanenden Bearbeitung von metallischen Werkstoffen, mit einem etwa zylindrischen, länglichen, eine Stirnseite aufweisenden Fräsergrundkörper, der an seinem Umfang wenigstens eine in Längsrichtung verlaufende Spannut mit wenigstens einer darin befindlichen Tasche für eine Wendeschneidplatte enthält, deren vier jeweils paarweise zueinander parallele Schneidkanten ein Viereck begrenzen und bei der zwischen zwei einander benachbarten Schneidkanten gegebenenfalls eine Nebenschneide ausgebildet ist, wobei die in die an der Stirnseite befindliche Tasche eingesetzte Wendeschneidplatte mit einer Schneidkante eine an dem Umfang des Bohrnutenfräsers liegende Fräserschneide und mit einer anderen Schneidkante eine an der Stirnseite des Bohrnutenfräsers liegende Bohrerschneide bildet, dadurch gekennzeichnet, daß die in die an der Stirnseite befindliche Tasche eingesetzte Wendeschneidplatte mit Fräserschneide und mit Bohrerschneide eine Wendeschneidplatte nach einem oder mehreren der vorhergehenden Patentansprüche ist.

## Claims

1. An indexable insert (16) for a drill groove milling cutter (1), having four cutting edges (24...27) which extend parallel with one another in pairs and bound a square, a subsidiary cutting edge being possibly formed between adjacent cutting edges (24...27) and two parallel cutting edges (24, 26) forming milling cutting edges, the other parallel cutting edges (25, 27) forming drill cutting edges, characterised in that two parallel cutting edges (25, 27) each have an associated chip breaker device (33, 39); that the two other parallel cutting edges (24, 26) are substantially free from chip breaker devices; that on its upper side (18), the indexable insert (16) has trough-shaped rake faces (29, 30, 31, 32) which adjoin the cutting edges (24, 25, 26, 27) in the inward direction and frame an internal plateau surface (33), which does not lie higher than the highest plane defined by two parallel cutting edges (24, 26), parallel with the rear side (17) of the indexable insert (16); and that the other two parallel cutting edges (25, 27) lie lower than the plateau surface (33), referred to the rear side (17).

2. An indexable insert (16) for a drill groove milling cutter (1), having four cutting edges (24...27) which extend parallel with one another in pairs and bound a square, a subsidiary cutting edge being possibly formed between adjacent cutting edges (24...27) and two parallel cutting edges (24, 26) forming milling cutting edges, the other parallel cutting edges (25, 27) forming drill cutting edges, characterised in that two parallel cutting edges (25, 27) each have an associated chip breaker device (36, 37); that the two other parallel cutting edges (24, 26) are substantially free from chip breaker devices; that on its upper side (18), the indexable insert (16) has trough-shaped rake faces (29, 30, 31, 32) which adjoin the cutting edges (24, 25, 26, 27) in the inward direction and frame an internal plateau surface (33), which does not lie higher in relation to the rear side (17) of the indexable insert (16) than the lowest plane defined by the cutting edges (24, 25, 26, 27); and that two strips (36) acting as chip breakers rise from the plateau surface (33) above the plane defined by the cutting edges (24, 25, 26, 27) and extend parallel with one another and parallel with two associated cutting edges (25, 27), and bound the rake faces (30, 32) at the end remote from the cutting edges (25, 27).

3. An indexable insert according to Claim 1 or 2,
characterised in that the rake face (30, 32) having the chip breaker device (36, 37; 33, 39) comprises a trough-shaped depression (38), which is disposed at a distance from the cutting edge (25, 27) and extends parallel therewith, and which is disposed at the base of the chip breaker device (36, 37; 33, 39).

4. An indexable insert according to Claim 1 or 2,
characterised in that the cutting edges (25, 27) with which chip breaker devices (36, 37, 38; 33, 39, 38) are associated extend in an undulating manner.

5. An indexable insert according to Claim 1 or 2,
characterised in that the rake faces (30, 32) with which chip breaker devices (36, 37, 38; 33, 39, 38) are associated have one or more depressions (40, 41) distributed in the direction of the cutting edge.

6. An indexable insert according to Claim 5,
characterised in that the depressions (41) terminate before the cutting edges (25, 27), without extending therethrough.

7. An indexable insert according to Claim 1 or 2,
characterised in that the depressions (40) extend through the cutting edges (25, 27).

8. An indexable insert according to Claim 2 or 3,
characterised in that the indexable insert (16) is parallelogram-shaped or diamond-shaped, the minor angle which two adjacent cutting edges (24...27) enclose with one another being between 75° and 90°, preferably 88°.

9. An indexable insert according to Claim 2,
characterised in that all four cutting edges (24, 25, 26, 27) lie in a common plane.

10. A drill groove milling cutter for the chip detaching machining of metal materials, having a substantially cylindrical elongate milling cutter body, which has an end face and whose periphery is formed with at least one longitudinally expanding flute containing at least one pocket for an indexable insert, whose four cutting edges parallel with one another in pairs bound a square, and in which possibly a subsidiary cutting edge is formed between two adjacent cutting edges, the indexable insert inserted in the pocket situated at the end face forming by one cutting edge a milling cutting edge disposed on the periphery of the drill groove milling cutter, and by another cutting edge forming a drill cutting edge disposed on the end face of the drill groove milling cutter, characterised in that the indexable insert with milling cutting edge and drill cutting edge inserted in the pocket situated at the end face is an indexable insert in accordance with one or more of the preceding patent claims.

## Revendications

1. Plaquette de coupe amovible (16) pour une fraise de forage et rainurage (1), avec quatre arêtes de coupe mutuellement parallèles deux à deux (24...27), lesquelles bordent un quadrangle, un tranchant secondaire (28) étant éventuellement aménagé entre arêtes de coupe voisines (24...27), et deux arêtes de coupe mutuellement parallèles (24, 26) formant des tranchants de fraisage, tandis que les autres arêtes de coupe mutuellement parallèles (25, 27) forment des tranchants de forage, caractérisée par le fait que deux arêtes de coupe mutuellement parallèles (25, 27) sont munies chacune d'un moyen briseur de copeau (33, 39) associé, par le fait que les deux autres arêtes de coupe mutuellement parallèles (24, 26) sont sensiblement exemptes de moyens briseurs de copeaux, par le fait que la plaquette de coupe amovible (16) présente sur sa face supérieure (18), des surfaces d'attaque (29, 30, 31, 32) éventuellement en forme de cuvette, succédant vers l'intérieur aux arêtes de coupe (24, 25, 26, 27), ces surfaces d'attaque encadrant une surface-plateau (33) située intérieurement, qui ne se trouve pas plus haut que le plan le plus élevé défini par deux arêtes de coupe mutuellement parallèles (24, 26), parallèlement au côté dorsal (17) de la plaquette de coupe amovible (16), et par le fait que, par rapport au côté dorsal (17), les deux autres arêtes de coupe mutuellement parallèles (25, 27) sont situées plus bas que la surface-plateau (33).

2. Plaquette de coupe amovible (16) pour une fraise de forage et rainurage (1), avec quatre arêtes de coupe mutuellement parallèles deux à deux (24...27), lesquelles bordent un quadrangle, un tranchant secondaire (28) étant éventuellement aménagé entre arêtes de coupe voisines (24...27), et deux arêtes de coupe mutuellement parallèles (24, 26) formant des tranchants de fraisage, tandis que les autres arêtes de coupe mutuellement parallèles (25, 27) forment des tranchants de forage, caractérisée par le fait que deux arêtes de coupe mutuellement parallèles (25, 27) sont munies chacune d'un moyen briseur de copeau (36, 37) associé, par le fait que les deux autres arêtes de coupe mutuellement parallèles (24, 26) sont sensiblement exemptes de moyens briseurs de copeaux, par le fait que la plaquette de coupe amovible (16) présente sur sa face supérieure (18), des surfaces d'attaque (29, 30, 31, 32) éventuellement en forme de cuvette, succédant vers l'intérieur aux arêtes de coupe (24, 25, 26, 27), ces surfaces d'attaque encadrant une surface-plateau (33) située intérieurement, laquelle, par rapport au côté dorsal (17) de la plaquette de coupe amovible (16), n'est pas située plus haut que le plan le plus bas défini par les arêtes de coupe (24, 25, 26, 27), et par le fait que deux nervures (36) servant de brise copeaux sont en surélévation hors de la surface-plateau (33), au delà du plan défini par les arêtes de coupe (24, 25, 26, 27), ces nervures s'étendant parallèlement l'une à l'autre et parallèlement à deux arêtes de coupe conjuguées (25, 27), et bordant les surfaces d'attaque (30, 32) en leur extrémité éloignée de l'arête de coupe (25, 27).

3. Plaquette de coupe amovible selon revendication 1 ou 2,
caractérisée par le fait que la surface d'attaque (30, 32) munie des moyens briseurs de copeaux (36, 37; 39) comporte une dépression (38) en forme de cuvette se trouvant à distance de l'arête de coupe (25, 27) et s'étendant parallèlement à celle-ci, cette dépression se trouvant au pied des moyens briseurs de copeaux (36, 37; 33, 39).

4. Plaquette de coupe amovible selon revendication 1 ou 2,
caractérisée par le fait que les arêtes de coupe (25, 27) auxquelles des moyens briseurs de copeaux (36, 37, 38; 33, 39, 38) sont conjugués suivent un tracé ondulé.

5. Plaquette de coupe amovible selon revendication 1 ou 2,
caractérisée par le fait que les surfaces d'attaque (30, 32) auxquelles des moyens briseurs de copeaux (36, 37, 38; 33, 39, 38) sont conjugués présentent une ou plusieurs dépressions (40, 41) réparties dans la direction de coupe.

6. Plaquette de coupe amovible selon revendication 5,
caractérisée par le fait que les dépressions (41) se terminent devant les arêtes de coupe (25, 27), sans traverser celles-ci.

7. Plaquette de coupe amovible selon revendication 1 ou 2,
caractérisée par le fait que les dépressions (40) traversent les arêtes de coupe (25, 27).

8. Plaquette de coupe amovible selon revendication 2 ou 3,
caractérisée par le fait que la plaquette de coupe amovible (16) est en forme de parallélogramme et/ou de losange, le plus petit angle que forment entre elles deux arêtes de coupe voisines (24...27) étant compris entre 75° et 90° et valant de préférence 88°.

9. Plaquette de coupe amovible selon revendication 2,
caractérisée par le fait que les quatre arêtes de coupe (24, 25, 26, 27) se trouvent toutes dans un plan commun.

10. Fraise de forage et rainurage, pour l'usinage par enlèvement de copeaux de matériaux métalliques, comportant un corps de base allongé sensiblement cylindrique, qui présente une face en bout et qui comporte dans sa périphérie au moins une rainure à copeaux s'étendant en direction longitudinale, dans laquelle se trouve un logement pour une plaquette de coupe amovible dont les quatre arêtes de coupe parallèles deux à deux délimitent un quadrangle, un tranchant secondaire étant éventuellement aménagé entre deux arêtes de coupe voisines, la plaquette de coupe amovible insérée dans le logement se trouvant dans la face en bout formant par une arête de coupe un tranchant de fraisage situé à la périphérie de la fraise de forage et rainurage et, par une autre arête de coupe, un tranchant de forage situé sur la face en bout de ladite fraise de forage et rainurage, caractérisée par le fait que la plaquette de coupe amovible à tranchant de fraisage et tranchant de forage insérée dans le logement dans la face en bout est une plaquette de coupe amovible selon une ou plusieurs des revendications précédentes.
